Europäisches Patentamt

European Patent Office

Office européen des brevets

(11) Publication number: **0 434 280 A2**

# EUROPEAN PATENT APPLICATION

(21) Application number: 90313453.4

(22) Date of filing: **11.12.90**

(51) Int. Cl.⁵: **C08J 7/06, B32B 27/32, C08J 5/18, //C08L23:10**

(30) Priority: **18.12.89 US 451906**

(43) Date of publication of application:
**26.06.91 Bulletin 91/26**

(84) Designated Contracting States:
**AT BE CH DE DK ES FR GB GR IT LI LU NL SE**

(71) Applicant: **MOBIL OIL CORPORATION**
**3225 Gallows Road**
**Fairfax Virginia 22037(US)**

(72) Inventor: **Chu, Shaw Chang**
**19 Saratoga Drive**
**West Windsor, New Jersey 08512(US)**
Inventor: **Kirk, Kevin Anthony**
**6025 Barberry Lane**
**Macedon, New York 14502(US)**

(74) Representative: **Colmer, Stephen Gary et al**
**Mobil Court 3 Clements Inn**
**London WC2A 2EB(GB)**

(54) **Polypropylene film and process for making same.**

(57) A thermoplastic film structure comprising a base portion of a thermoplastic resin which comprises polypropylene and a coating portion of an alkali metal salt of an alkyl sulfate is disclosed. The film is characterised by improved anti-blocking characteristics without the attendant problems associated with decreased clarity, adhesion and wettability common to films treated to improve their anti-blocking characteristics. The invention also provides a process for making the film structure in which the polypropylene-containing thermoplastic resin is extruded into a sheet; the sheet oriented in the longitudinal direction to form a monoaxially oriented film; the film coated with the alkali metal salt of an alkyl sulfate; and the coated film oriented in the transverse direction.

EP 0 434 280 A2

# POLYPROPYLENE FILM AND PROCESS AND MAKING SAME

This invention relates to thermoplastic film structures; more particularly, this invention relates to polypropylene - containing thermoplastic film structures of improved anti-blocking characteristics and to their preparation.

Polypropylene films have found wide acceptance in the packaging industry, especially in food packaging, because of their superior physical properties. Polypropylene film, usually biaxially oriented, is characterised by high tensile modulus and stiffness, excellent optical clarity and good moisture resistance. Nevertheless, polypropylene film possesses one major disadvantageous property: high inherent coefficient of friction (COF). High COF complicates the processing of polypropylene film by imparting poor transport to it. In addition, high COF creates film storage problems: one layer of polypropylene film sticks to those layers above and beneath it, creating the problem commonly referred to as blocking.

Many solutions to overcome this major deficiency have been proposed in the art. One such proposal has been to incorporate additives in the polypropylene resin processed to form the film; fatty acids amides are a class of additive which decrease the film's COF. However, the presence of fatty acid amides on the film surface frequently adversely affects the appearance of the film by decreased gloss and the presence of streaks. Another serious disadvantage of using fatty acid amides is the effect of fatty acid amides on polypropylene film surface wettability and adhesion. This adverse characteristic applies to coatings, inks and adhesives whether organic or water based. Of even greater concern in the use of fatty acid amides is their need to be applied as an organic solution, utilising an organic solvent. Health and safety factors thus complicate in-plant utilisation of this class of slip additive.

Another suggestion advanced in the art to reduce the blocking characteristic of polypropylene film is to add a finely divided inorganic material as a thin surface layer. Such a coating not only provides a non-blocking surface having improved slip characteristics but is also independent of the heat history of the film. Moreover, the addition of the surface layer of an inorganic material does not create the adverse optical and wettability effects associated with amide-modified films. However, polypropylene film is often laminated to other films; Such laminates, when provided as a thin surface layer containing finely divided inorganic material, exhibit significantly higher COF values than does the unlaminated polypropylene film and are known to perform poorly on conventional form, fill and seal machines.

There is a need in the art for a new and improved polypropylene film characterised by improved anti-blocking characteristics and decreased COF but without concomitant decline in other properties which are typical of the solutions advanced in the prior art.

In accordance with one aspect of this invention, there is provided a thermoplastic film structure comprising a base portion, preferably a biaxially oriented base portion, including a thermoplastic resin which comprises polypropylene and a coating comprising an alkali metal salt of an alkyl sulfate.

The thermoplastic film structure of the present invention has reduced COF and good non-blocking characteristics compared to unmodified polypropylene films. This film structure is furthermore characterised by a coefficient of friction substantially independent of its previous thermal history and is free from optical flaws common to reduced COF films.

The film structure of the present invention is not adversely affected by diminished wettability and adhesion of inks, coatings and adhesives, whether water or solvent based. Finally, the film structure of this invention maintains its decreased COF even when laminated to other films such as glassine papers.

In further accordance with the present invention a process for preparing a thermoplastic film is taught. In this process a thermoplastic resin which includes polypropylene is extruded into a sheet. The film is oriented in the longitudinal direction. Thereupon, an alkali metal of salt of an alkyl sulfate is coated onto said longitudinally oriented film. The coated film is then oriented in the transverse direction to form the final biaxially oriented film structure.

The thermoplastic structure film of the invention comprises a base portion including a relatively thick layer of a resin which comprises polypropylene. The base portion may suitably be a polypropylene homopolymer, a blend of a polypropylene homopolymer and another olefinic polymer, na coextrudate of a polypropylene homopolymer and another olefinic polymer. More preferably, the base portion may comprise, and preferably consist of, a polypropylene homopolymer coextrudate of a polypropylene homopolymer and an ethylene-propylene copolymer.

The second portion of the thermoplastic film structure, the coating portion, comprises a layer of an alkali metal salt of an alkyl sulfate. Preferably, the coating is a potassium or sodium salt of an alkyl sulfate. More preferably, the alkali metal salt of the alkyl sulfate is a sodium salt. It is preferred that the alkyl group of the alkyl sulfate contains from 4 to 24 carbon atoms. Still more preferably, the number of carbon atoms in the alkyl group of the alkyl sulfate is from 6 to 18.

Even more preferably, the alkyl group in the alkyl sulfate salt contains from 8 to 16 carbon atoms. Yet even more preferred, the alkyl group contains from 12 to 14 carbon atoms. In a particularly preferred embodiment, the alkyl group of the alkyl sulfate salt is lauryl. Thus, more preferably, the alkali metal salt of the alkyl sulfate is sodium lauryl sulfate.

In another aspect of the present invention the above-described coated film structure may be part of a composite film structure wherein the coated film is laminated onto or supported by another film ply which may be a plastic, paper of metal film. In a particularly preferred embodiment, the composite film of the present invention is a laminate of the coated film of the present invention and glassine paper.

In accordance with a further aspect of this invention, there is provided a process for making a biaxially oriented thermoplastic film structure wherein a thermoplastic resin which comprises polypropylene is melted and extruded into a sheet, for example through a slit die; the extrudate is cooled, for example by casting onto a cooling drum, to form a solid sheet which is oriented in the longitudinal direction; an alkali metal salt of an alkyl sulfate is coated onto the surface of the longitudinally oriented film; and the film is thereafter oriented in the transverse direction form a biaxially oriented coated film structure.

In a preferred embodiment of this process the quenching of the thermoplastic melt on the cooling drum is followed by reheating of the sheet prior to orienting in the longitudinal direction. Preferably, stretching in the longitudinal direction involves longitudinal stretching such that the film is increased from 2.5 times to 8 times its original length. More preferably, the film is increased from 3 times to 6 times its original length.

In a further preferred embodiment of the present invention the longitudinally stretched film, prior to the application of the coating layer, is surface treated to improve surface wettability and adhesion. Preferably, this surface treatment is provided by corona treatment or flame treatment. In a particularly preferred embodiment of this surface treatment step the surface that is subsequently coated is corona treated.

In a preferred embodiment of the step of coating the surface, that step is provided by gravure coating. Other coating methods known in the art, for example, spray coating, may be substituted for the preferred use of gravure coating.

After completion of the coating operation, the film is preferably subjected to heating to accelerate drying of the coating which is applied as a solution, preferably as an aqueous solution. Drying involves exposure of the film to elevated temperature. Depending upon the temperature employed in drying the coated monoaxially oriented film, the film may or may not be cooled or heated to obtain optimum temperature conditions during the next step, transverse orientation.

In the final essential step, the longitudinally oriented, coated film is oriented in the transverse direction. In the preferred embodiment wherein stretching is utilised to orient the film in the transverse direction, the film is stretched from 6 to 10 times its original width. More preferably, the longitudinally oriented films is stretched from 7 to 9 times its prestretched width.

In a preferred embodiment of this process, the film is annealed following transverse direction orientation. Annealing of the biaxially oriented film involves exposure of the film to elevated temperature. As in all heating steps, preferred temperatures are a function of the identity and constituency of the polypropylene-containing thermoplastic resin constituting the film.

In yet a further step included in a preferred embodiment of this invention the uncoated surface of the biaxially oriented coated film is treated to improve its wettability and adhesion. Such treatment permits printing thereupon or the application of an adhesive followed by the application of another film ply to produce a laminate structure. In a preferred embodiment this surface treatment step is provided by corona treatment.

In a preferred embodiment, wherein an aqueous solution of an alkali metal salt of an alkyl sulfate is utilised, the concentration of the alkali metal salt of the alkyl sulfate in the solution is from 0.15% to 10% by weight. More preferably, the concentration of the sulfate solute in the aqueous solution is from 0.50% to 6% by weight. Still more preferably, the concentration of the alkali metal salt of an alkyl sulfate is from 0.75% to 4% by weight. In all of these recitations, the percent by weight of the solute is based on the total weight of the solution.

The following Examples illustrate the invention.

EXAMPLE

Polypropylene resin (Exxon 4252 "EXXON IS A REGISTERED TRADE MARK) was heated to 250°C whereupon the resin melted. The polypropylene melt was then extruded through a slit die of a pilot scale film orienter. The extrudate was cast upon a cooling drum maintained at 30°C and the polypropylene was quenched on the drum to produce a sheet 30 mils thick. The sheet was next reheated to 140°C and then stretched five times its original length in the longitudinal direction. This resulted in a decreased in thickness to about 6 mils. The longitudinally stretched film was then corona treated followed by coating of the corona treated surface with a 3% by weight aqueous solution of sodium lauryl sulfate. The coated film was dried at 160°C. The dry, coated film was next cooled to 145°C and stretched in a transverse direction. The width of the film was increased to eight times its original width. The thus formed biaxially stretched film was annealed at 160°C. The annealed film, now 0.8 mil thick was then corona treated on the film's uncoated surface.

The resulting coated film was determined to have a haze of 2%, as measured by ASTM Test Procedure D-1003; a gloss of 84.4%, as measured by ASTM Test Procedure D-1894; and a blocking force of 0.4 g/in.

EXAMPLE 2

A coated polypropylene film was formed in accordance with the procedure of Example 1. The only difference between the procedure used in this Example and Example 1 was that the concentration of the aqueous solution of sodium lauryl sulfate, coated onto the longitudinally stretched film, was 1% by weight, rather than the 3% by weight utilised in Example 1.

The resulting coated film has a haze of 1.4%, a gloss of 92.5%, a coefficient of friction 0.19 and a blocking force of 0.8 g/in. These physical properties were determined in accordance with the test procedures set forth in Example 1.

The Example establishes that decreased concentration of sodium lauryl sulfate somewhat decreases the anti-blocking characteristics of the film while marginally improving its optical properties.

**Claims**

1. A thermoplastic film structure comprising a base portion including a thermoplastic resin which comprises polypropylene and a coating portion comprising an alkyl metal salt of an alkyl sulfate.

2. A film structure according to claim 1 wherein the base portion comprises a thermoplastic polypropylene homopolymer; a thermoplastic blend of a polypropylene homopolymer and another olefinic polymer; a thermoplastic coextrudate of a polypropylene homopolymer an another olefinic polymer; or a mixture thereof.

3. A film structure according to claim 1 and 2 wherein the other olefinic polymer coextruded with the polypropylene homopolymer comprises an ethylene-propylene copolymer.

4. A film structure according to any preceeding claim wherein the coating portion comprises a sodium or a potassium salt of an alkyl sulfate.

5. A film structure according to any preceeding claim wherein the alkyl group of the alkyl sulfate contains from 4 to 24 carbon atoms.

6. A film structure according to claim 5 wherein the alkyl group contains from 10 to 14 carbon atoms.

7. A film structure according to any preceeding claim wherein the coating portion comprises an alkali metal lauryl sulfate.

8. A film structure according to any preceeding claim which comprises at least one additional ply of plastic, paper or metal film contiguous with the uncoated, corona treated surface.

9. A process for making a biaxially oriented thermoplastic film structure, which process comprises extruding a thermoplastic resin which comprises polypropylene into a sheet; orienting the sheet in the longitudinal direction to form a monoaxially oriented film; coating an alkali metal salt of an alkyl sulfate onto the longitudinally oriented film; and orienting the coated film in the transverse direction to form a biaxially oriented film structure.

10. A process according to claim 9 wherein the longitudinal orientation comprises stretching the sheet from 2.5 to 8 times its original length.

11. A process according to claim 9 or 10 wherein the transverse orientation comprises stretching the longitudinally oriented film from 6 times to 10 times its original width.

12. A process according to any of claims 9 to 11 wherein the surface of the longitudinally stretched film is treated to improve its wettability and adhesion prior to the coating step.

13. A process according to any of claims 9 to 12 wherein the coated biaxially oriented film structure is annealed by exposure to elevated temperature.

14. A process according to any of claims 9 to 13 wherein the surface of the uncoated side of the biaxially oriented film is treated to improve its wettability and adhesion.

15. A process according to any of claims 9 to 14 wherein the coating step comprises gravure coating with an alkali metal salt of alkyl sulfate.

16. A process according to claim 15 wherein the alkali metal salt of an alkyl sulfate is coated onto the longitudinally oriented film as an aqueous solution.

17. A process according to claim 16 wherein the alkali metal salt of an alkyl sulfate is present in the solution in a concentration from 0.15% to 10% by weight.